# EUROPÄISCHE PATENTSCHRIFT

(11) **EP 4 194 827 B1**
(45) Veröffentlichungstag und Bekanntmachung des Hinweises auf die Patenterteilung: **15.07.2026**
(21) Anmeldenummer: 22205182.3
(22) Anmeldetag: 03.11.2022
(51) Int. Cl.: G01K 7/16, G01K 7/34, G01K 13/02

(54) **TEMPERATURMESSSYSTEM ZUR TEMPERATURERFASSUNG EINES MEDIUMS**
TEMPERATURE MEASURING SYSTEM FOR DETECTING THE TEMPERATURE OF A MEDIUM
SYSTÈME DE MESURE DE TEMPÉRATURE POUR DÉTECTER LA TEMPÉRATURE D'UN MILIEU

(30) Priorität: 13.12.2021 DE 102021214197
(43) Veröffentlichungstag der Anmeldung: 14.06.2023
(73) Patentinhaber: ContiTech Deutschland GmbH, 30175 Hannover (DE)
(72) Erfinder: Reck, Siegfried, 30165 Hannover (DE); Richards, Justin, 30165 Hannover (DE); Campana, Manuel, 30165 Hannover (DE)
(74) Vertreter: Preusser, Andrea

(56) Entgegenhaltungen:
- DE-A1- 102019 209 199
- JP-A- 2000 121 457

## Beschreibung

Die vorliegende Erfindung betrifft ein Temperaturmesssystem zur Temperaturerfassung eines Mediums, sowie ein Messverfahren zur Temperaturerfassung eines Mediums.

Zum Transport bzw. zur Führung von Medien wie insbesondere von Fluiden ist die Verwendung von Schläuchen und Rohren bekannt, welche gemeinsam auch als Medienführungen bezeichnet werden können. Schläuche werden dabei als eher flexibel hinsichtlich ihres Materials angesehen, Rohre als eher starr. Zu den Fluiden gehören neben Flüssigkeiten auch Gase und pastöse Stoffe.

Mehrere Schläuche können dabei untereinander mittels Schlauchkupplungen miteinander verbunden werden, welche jeweils an dem entsprechenden offenen Ende fest an dem jeweiligen Schlauch angeordnet sind. Über derartige Schlauchkupplungen können Schläuche ebenfalls mit Aggregaten verbunden werden, welche ihrerseits eine entsprechende Kupplung aufweisen. Derartige Schlauchkupplungen können als sogenannte Schnellkupplungen, im Englischen als Quick Connector bezeichnet, ausgebildet sein, welche ein schnelles und einfaches Verbinden und zerstörungsfreies Lösen ermöglichen können. Derartige Schlauchkupplungen können aus Metall aber auch aus Kunststoff, insbesondere als Spritzgussteile, ausgebildet sein. Dies gilt vergleichbar für Rohre. Entsprechend können derartige Schlauch- oder Rohrkupplungen auch gemeinsam als Medienführungskupplungen bezeichnet werden.

Für viele Anwendungen kann es sinnvoll oder sogar erforderlich sein, die Temperatur des strömenden Mediums sensorisch zu erfassen. Hierzu ist es beispielsweise bekannt, einen Temperatursensor, üblicherweise in Form eines NTC-Thermistors (Heißleiter mit negativem Temperaturkoeffizienten), in eine Öffnung einer Schnellkupplung einzusetzen. Das Sensorelement bzw. der Messwertumformer des NTC-Thermistors ragt dabei durch eine Durchgangsöffnung der Schnellkupplung in das Medium hinein und hat somit direkten Kontakt zum Medium, was die Temperaturübertragung von Medium zu Messwertumformer begünstigen, d.h. die Ansprechzeit des NTC-Thermistors geringhalten kann.

Nachteilig ist hierbei, dass die Durchgangsöffnung durch die Schnellkupplung hindurch, welche der Aufnahme und Durchführung des Messwertumformers des NTC-Thermistors dient, mit aufgenommenem Messwertumformer mediendicht abzuschließen ist. Entsprechend sind Maßnahmen zu treffen, um die Dichtigkeit am Anschluss des Messwertumformers herzustellen. Diese Maßnahmen können mit höheren Kosten für zusätzliche Komponenten und dem Risiko von verbleibenden Undichtigkeiten verbunden sein.

Nachteilig ist ferner, dass beim Austausch des Messwertumformers, beispielsweise im Falle eines Defekts, ein umfangreicher Arbeitsaufwand anfallen kann. Durch die Tatsache, dass bei einer Demontage der entnommene Messwertumformer eine offene Durchgangsöffnung in das Innere der Schnellkupplung hinterlässt, muss vor dem Austausch des Messwertumformers das Medium aus dem System entfernt werden.

Alternativ ist daher bekannt, in der Schnellkupplung eine Mulde vorzusehen, welche orthogonal zum Fluss des Mediums angebracht ist. Mit anderen Worten ist für den Messwertumformer des NTC-Thermistors keine Durchgangsöffnung vorhanden, so dass die entsprechenden zuvor beschriebenen Nachteile vermieden werden können. Stattdessen ist der Messwertumformer des NTC-Thermistors in der Mulde der Schnellkupplung angeordnet und ragt somit, durch das Material der Schnellkupplung muldenförmig umgeben, in das Medium hinein, ohne mit dem Medium in direkten Kontakt zu kommen.

Dabei ist zwischen der Oberfläche des Messwertumformers und der Innenwand der Mulde ein Freiraum mit einem Wärmeleitmittel auf Silikonbasis gefüllt, um die Wärmeübertragung vom Medium durch das Material der Mulde hindurch und über das Wärmeleitmittel zum Messwertumformer zu verbessern. Die Wärme des Mediums dringt somit bei diesem Aufbau durch das Material der Mulde und durch das Wärmeleitmittel hindurch und gelangt so zum Messwertumformer des NTC-Thermistors.

Nachteilig ist hierbei, dass die hohe Wärmekapazität des Materials der Mulde inklusive ihrer Füllung mit dem Wärmeleitmittel dennoch zu einer verhältnismäßig hohen Ungenauigkeit der Temperaturerfassung führt sowie eine vergleichsweise lange Ansprechzeit verursacht.

Dies gilt vergleichbar für die Messung der Temperatur in Fluiden, die von Schläuchen geleitet werden. Um die Temperatur zu messen, wird in der Regel ein Messgrößenumformer in Kontakt mit dem Fluid gebracht, welcher die Temperatur des Fluids annimmt und dabei einen elektrischen Parameter (z. B. den elektrischen Widerstand) messbar verändert.

Nachteilig an dieser Art der Temperaturmessung ist, dass der Messgrößenumformer einen gewissen Bauraum innerhalb des Innenraums des Schlauches benötigt, welcher von Fluid durchströmt wird. Somit kann der Messgrößenumformer einen Strömungswiderstand innerhalb der Fluidleitung darstellen.

Nachteilig ist auch, dass die thermische Kapazität des Messgrößenumformers die Messung verzögern kann. Somit steht am Ausgang des Temperatursensors stets eine Temperatur zur Verfügung, welche nicht aktuell, sondern um die thermische Ansprechzeit zeitlich verzögert ist, d.h. aus der Vergangenheit stammt. Dies kann die Funktionen, welche die sensorisch erfasste Temperatur verwenden, beispielsweise zur Temperaturregelung des Fluids, nachteilig beeinflussen.

Nachteilig ist ferner, dass ein Austausch des Messgrößenumformers lediglich durch das Öffnen der Fluidleitung erfolgen kann. Auch hier müsste, wie bereits zuvor hinsichtlich einer Temperaturerfassung innerhalb einer Schlauchkupplung, das Fluid abgelassen werden, was einen entsprechenden Aufwand erfordern sowie eine Betriebs- bzw. Funktionsunterbrechung des Schlauches bzw. dessen zugeordneter Aggregate, Maschinen und dergleichen bedeuten kann.

Die JP 2000 121457 A beschreibt die Bereitstellung einer sicheren Messvorrichtung für die Temperatur eines Fluids in einer Leitung, die die Temperatur eines Messfluids von der Außenseite einer Messleitung messen kann. Die Messvorrichtung für eine Fluidtemperatur in einer Leitung umfasst eine Messleitung mit einem Messfluid mit hoher elektrischer Leitfähigkeit, das in einer Leitung fließt, in der die elektrische Leitfähigkeit geringer ist als die des Messfluids, eine außerhalb der Messleitung vorgesehene Stromanlegeeinrichtung zum Anlegen von Strom an das Messfluid, eine Spannungsabfall-Erfassungseinrichtung zum Erfassen eines durch das Messfluid verursachten Spannungsabfalls und eine Recheneinrichtung zum Berechnen einer Temperatur des Messfluids aus einem Erfassungswert der Spannungsabfall-Erfassungseinrichtung.

Die DE 10 2019 209 199 A1 beschreibt ein Messinstrument für die räumliche Verteilung mindestens einer Eigenschaft eines strömenden Mediums, umfassend eine von dem Medium durchströmbare dreidimensionale Struktur aus mindestens einem elektrisch leitenden oder halbleitenden Material, weiterhin umfassend eine Vielzahl von Kontaktierungsmitteln, wobei jedes Kontaktierungsmittel einen definierten Ort innerhalb der dreidimensionalen Struktur kontaktiert und es somit ermöglicht, an diesem Ort eine elektrische Spannung an die dreidimensionale Struktur anzulegen und bzw. oder abzugreifen, und bzw. oder einen elektrischen Strom in die dreidimensionale Struktur einzuleiten und bzw. oder aus der dreidimensionalen Struktur auszuleiten.

Die DE 10 2019 209 199 A1 beschreibt auch ein Verfahren zum Betreiben des Messinstruments, wobei Linienintegrale des elektrischen Widerstands, der Impedanz und bzw. oder einer hieraus abgeleiteten Größe zwischen den Orten vieler Paarungen ermittelt werden und wobei durch tomographische Rekonstruktion aus den Linienintegralen eine räumliche Verteilung der interessierenden Größe ermittelt wird.

Eine Aufgabe der vorliegenden Erfindung ist es, die Möglichkeiten der Temperaturerfassung von Fluiden in Medienführungen zu verbessern. Dies soll möglichst einfach, flexibel, bauraumsparend und bzw. kostengünstig erfolgen können. Zumindest soll eine Alternative zu den bekannten Möglichkeiten geschaffen werden.

Die Aufgabe wird erfindungsgemäß durch ein Temperaturmesssystem, sowie durch ein Messverfahren mit den Merkmalen der unabhängigen Ansprüche gelöst. Vorteilhafte Weiterbildungen sind in den Unteransprüchen beschrieben.

Somit betrifft die vorliegende Erfindung ein Temperaturmesssystem mit einer Medienführung, vorzugsweise einer Fluidleitung, mit einem Körper, welcher eine Durchgangsöffnung zur Führung eines Mediums aufweist, mit wenigstens einem Temperatursensor mit einer ersten Elektrode und mit einer zweiten Elektrode, welcher gegenüber der Durchgangsöffnung der Medienführung derart angeordnet sind, so dass zwischen den beiden Elektroden ein elektrisches Wechselfeld durch die Durchgangsöffnung der Medienführung hindurch angelegt werden kann, wobei die beiden Elektroden außerhalb der Durchgangsöffnung des Körpers der Medienführung angeordnet sind, und mit einem Messsystem, welches ausgebildet ist,
- das elektrische Wechselfeld zwischen den beiden Elektroden anzulegen,
- die frequenzabhängige komplexe Gesamtimpedanz zwischen den beiden Elektroden als Funktion der Frequenz zu erfassen und
- aus der erfassten frequenzabhängigen komplexen Gesamtimpedanz die Temperatur des Mediums zu bestimmen.

Der vorliegenden Erfindung liegt dabei die Erkenntnis zugrunde, dass auf diese Art und Weise die Temperatur des Mediums innerhalb der Durchgangsöffnung der Medienführung indirekt sowie ohne zeitlichen Versatz mittels der Erfassung der komplexen elektrischen Parameter der Konduktivität und der Permittivität des Mediums bestimmt werden kann, da diese Parameter systematisch und eindeutig von der Temperatur abhängen. Entsprechend kann eine Umrechnung erfolgen. Der Temperatursensor kann auch als Impedanz-Sensor bezeichnet werden.

Hierdurch kann die Temperatur bestimmt werden, ohne dass ein direkter Kontakt des Temperatursensors mit dem Medium erfolgen muss. Auch kann die Bestimmung der Temperatur des Medium zeitlich aktuell, d.h. ohne zeitlichen Verzug bzw. Versatz erfolgen. Auf diese Art und Weise können die entsprechenden eingangs beschriebenen Nachteile reduziert oder sogar vollständig vermieden werden.

In jedem Fall kann eine der Elektroden oder können beide Elektroden innenseitig, dazwischen oder außenseitig in das Material oder in die Schichten bzw. zwischen die Schichten der Medienführung bzw. dessen Körpers integriert bzw. dort angeordnet sein, was den Gestaltungsspielraum erhöhen kann. Dabei die eine Elektrode oder beide Elektroden durch das Material bzw. durch wenigstens eine Schicht der Medienführung bzw. dessen Körpers gegenüber dem Medium zu isolieren kann einen direkten Kontakt zwischen Elektrode bzw. Elektroden und dem Medium vermeiden. Dies kann die Elektrode bzw. Elektroden vor dem Medium schützen.

Gemäß einem Aspekt der Erfindung sind die beiden Elektroden flächig ausgebildet und parallel zur flächigen Erstreckung des Körpers der Medienführung angeordnet. Dies kann die Durchdringung der Durchgangsöffnung der Medienführung mittels des elektrischen Wechselfeld begünstigen.

Gemäß einem weiteren Aspekt der Erfindung sind die beiden Elektroden auf einem gemeinsamen, vorzugsweise flexiblen, Träger angeordnet und der Träger wird an dem Körper der Medienführung gehalten. Dies kann es ermöglichen, wenigstens die beiden Elektroden und vorzugsweise den gesamten Temperatursensor als separates Bauteil auszubilden und dann an bzw. auf der Medienführung anzuordnen. Dies kann den Einsatz bzw. die Anwendung der Elektroden bzw. des Temperatursensors einfacher und flexibler gestalten und insbesondere ein Nachrüsten auf einer Medienführung ermöglichen.

Dabei ein flexibles Material des Trägers zu verwenden bzw. die Konstruktion des Trägers, beispielsweise C-förmig, flexibel zu gestalten, kann es ermöglichen, einen biegsamen Träger zu erhalten, welcher zur Montage aufgebogen, um die Medienführung herum gelegt und durch die eigene Federkraft dort selbsttätig sicher gehalten werden kann.

Gemäß einem weiteren Aspekt der Erfindung wird der Träger formschlüssig, vorzugsweise ferner kraftschlüssig, auf dem, vorzugsweise zylindrischen, Körper der Medienführung gehalten. Dies kann insbesondere die Montage vereinfachen. Dies kann insbesondere mittels eines flexiblen Trägers umgesetzt werden, wie zuvor beschrieben.

Gemäß einem weiteren Aspekt der Erfindung sind die beiden Elektroden derart auf einem gemeinsamen Träger angeordnet, um in berührenden Kontakt mit einer Außenwand des Körpers der Medienführung auf dieser aufzuliegen. Auch in diesem Fall kann eine separate Ausbildung der Elektroden und insbesondere des Temperatursensors erfolgen, wie zuvor bereits beschrieben. Dabei die Elektroden in direkten berührenden Kontakt mit der Außenwand der Medienführung zu bringen kann die Strecke durch die Medienführung hindurch geringhalten und somit den Messvorgang begünstigen.

Erfindungsgemäß sind die beiden Elektroden außerhalb der Durchgangsöffnung des Körpers der Medienführung angeordnet. Dies kann sicherstellen, dass die beiden Elektroden durch den Körper der Medienführung von dem Medium getrennt und somit vor dem Medium geschützt werden, da hierdurch ein direkter Kontakt vermieden werden kann.

Gemäß einem weiteren Aspekt der Erfindung weist der Körper der Medienführung eine Außenwand auf und der Temperatursensor ist auf der Außenwand des Körpers angeordnet. Dies kann eine konkrete Umsetzung wie bereits zuvor beschrieben darstellen.

Gemäß einem weiteren Aspekt der Erfindung ist der Körper der Medienführung elektrisch isolierend ausgebildet. Dies kann die elektrische Isolation der Elektroden gegenüber einander auf einfache Art und Weise ermöglichen.

Die vorliegende Erfindung betrifft auch ein Messverfahren zur Temperaturerfassung eines Mediums, vorzugsweise eines Fluids, innerhalb einer Durchgangsöffnung einer Medienführung, vorzugsweise einer Fluidleitung, mittels wenigstens einem Temperatursensor mit einer ersten Elektrode und mit einer zweiten Elektrode, welcher gegenüber der Durchgangsöffnung der Medienführung derart angeordnet sind, so dass zwischen den beiden Elektroden ein elektrisches Wechselfeld durch die Durchgangsöffnung der Medienführung hindurch angelegt werden kann, wobei die beiden Elektroden außerhalb der Durchgangsöffnung des Körpers der Medienführung angeordnet sind, mit wenigstens den Schritten:
- Anlegen eines elektrischen Wechselfelds zwischen den beiden Elektroden,
- Erfassen der frequenzabhängigen komplexen Gesamtimpedanz zwischen den beiden Elektroden als Funktion der Frequenz und
- Bestimmen der Temperatur des Mediums aus der erfassten frequenzabhängigen komplexen Gesamtimpedanz.

Hierdurch kann ein Verfahren geschaffen werden, um die entsprechenden zuvor beschriebenen Aspekte mittels des zuvor beschriebenen erfindungsgemäßen Temperaturmesssystems bzw. mittels des zuvor beschriebenen erfindungsgemäßen Temperatursensors umzusetzen. Das erfindungsgemäße Verfahren kann jedoch auch unabhängig von der zuvor beschriebenen erfindungsgemäßen Temperaturmesssystem bzw. von dem zuvor beschriebenen erfindungsgemäßen Temperatursensor umgesetzt werden.

Ein Ausführungsbeispiel und weitere Vorteile der Erfindung werden nachstehend im Zusammenhang mit den folgenden Figuren erläutert. Darin zeigt:

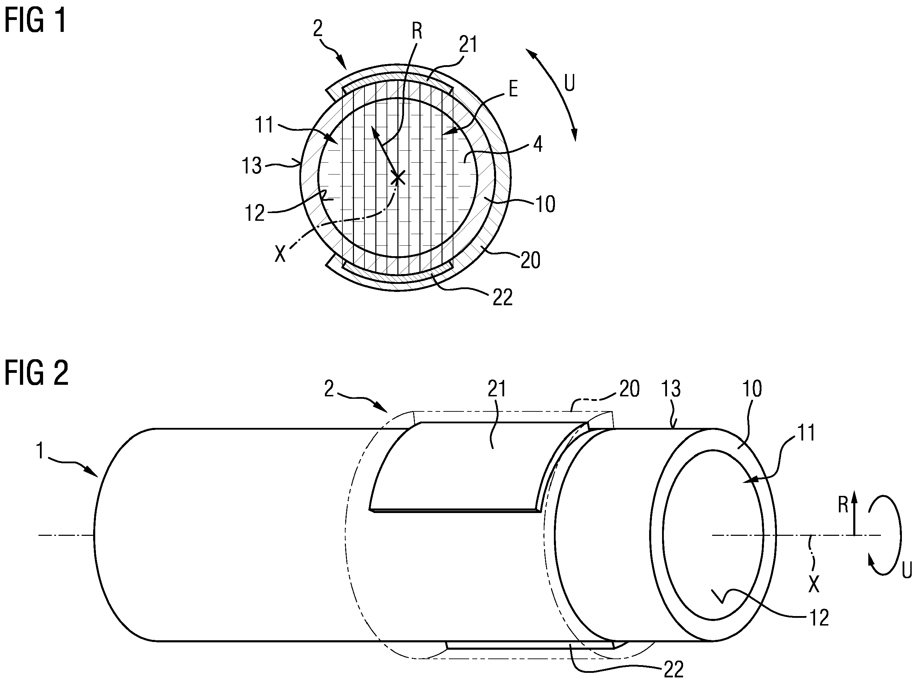

- Figur 1: einen Querschnitt durch eine Medienführung mit erfindungsgemäßem Temperatursensor;
- Figur 2: eine perspektivische schematische Darstellung der Figur 1;

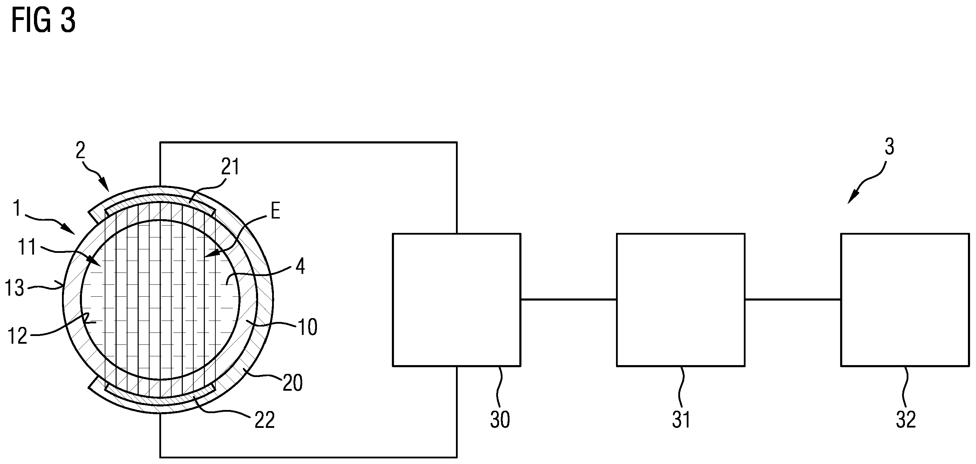

- Figur 3: eine schematische Darstellung eines erfindungsgemäßen Temperaturmesssystems; und
- Figur 4: ein Ablaufdiagramm eines erfindungsgemäßen Verfahrens.

Die Beschreibung der o.g. Figuren erfolgt in zylindrischen Koordinaten mit einer Längsachse X, einer zur Längsachse X senkrecht ausgerichteten radialen Richtung R sowie einer um die Längsachse X umlaufenden Umfangsrichtung U. Die Längsachse X, die radiale Richtung R und die Umfangsrichtung U können gemeinsam auch als Raumrichtungen X, R, U bzw. als zylindrische Raumrichtungen X, R, U bezeichnet werden.

Eine Medienführung 1 wird am Beispiel einer Fluidleitung 1 betrachtet, welche ein Schlauch 1, ein Rohr 1 oder auch eine Kupplung 1, beispielsweise für einen Schlauch oder ein Rohr, sein kann. Die Fluidleitung 1 weist einen Körper 10 auf, welcher bei einem Schlauch 1 zumindest im Wesentlichen aus einem elastischen bzw. elastomeren Material bzw. bei einem Rohr 1 oder bei einer Kupplung 1 auf einem starren Material, beispielsweise Metall oder Kunststoff, bestehen kann, je nach Anwendungsfall. Bei einer Fluidleitung 1 in Form eines Schlauches 1 kann der Körper 10 als Schlauchkörper 10 oder als Schlauchwand 10 bezeichnet werden.

In jedem Fall weist die Körper 10 der Fluidleitung 1 einen zylindrischen Querschnitt auf, wobei der Körper 10 der Fluidleitung 1 eine Durchgangsöffnung 11 in der Umfangsrichtung U vollständig umschließt. Durch die Durchgangsöffnung 11 kann entlang der Längsachse X ein Medium 4 wie hier ein Fluid 4 strömen bzw. gefördert werden. Dabei steht das Fluid 4 in Kontakt mit einer Innenwand 12 des Körpers 10. Der Innenwand 13 des Körpers 10 liegt radial außen eine Außenwand 13 des Körpers 10 gegenüber.

Ein erfindungsgemäßer Temperatursensor 2 in Form eines Impedanzsensors 2 weist einen flexiblen Träger 20 auf, welcher C-förmig und radial federelastisch ausgebildet ist, was beispielsweise durch die Verwendung eines Materials mit einer ausreichenden Flexibilität umgesetzt werden kann. An seinen beiden Enden weist der C-förmige Träger 20 radial innenseitig eine erste Elektrode 21 und eine zweite Elektrode 20 auf, welche von außen, d.h. von außerhalb des Temperatursensors 2, elektrisch über einen Anschluss (nicht dargestellt) sowie elektrische Leitungen (nicht dargestellt) kontaktiert werden können.

Der C-förmige Träger 20 kann aufgebogen und radial auf die Außenwand 13 des Körpers 10 der Medienführung 1 aufgesetzt werden, so dass der Temperatursensor 2 wenigstens formschlüssig und ggfs. zusätzlich kraftschlüssig dort selbsttätig gehalten werden kann, was eine einfache Montage, insbesondere zum Nachrüsten, ermöglichen kann.

Die beiden Elektroden 20, 21 können nun an ein Messsystem 3 angeschlossen werden, welches auch als Auswertesystem 3 bezeichnet werden kann. Das Messsystem 3 weist eine Messeinheit 30 auf, welche auch als Mess-Elektronik 30 bezeichnet werden kann und ausgebildet ist, ein elektrisches Wechselfeld E zwischen den beiden Elektroden 21, 22 anzulegen. Die Mess-Elektronik 30 ist ferner ausgebildet, die frequenzabhängige komplexe Gesamtimpedanz zwischen den beiden Elektroden 21, 22 als Funktion der Frequenz zu erfassen und diese einer, vorzugsweise digitalen, Auswerteeinheit 31 zur Verfügung zu stellen. Die Auswerteeinheit 31 ist dazu ausgebildet, aus der erfassten frequenzabhängigen komplexen Gesamtimpedanz die Temperatur des Mediums bzw. des Fluids zu bestimmen. Die bestimmte Temperatur kann dann einer Ausgabeeinheit 32, beispielsweise als optische Anzeige, zur Verfügung gestellt werden, um die bestimmte Temperatur einer Person optisch anzeigen zu können.

Die Medienführung 1 mit aufgesetztem erfindungsgemäßen Temperatursensor 2 und das daran angeschlossene erfindungsgemäße Messsystem 3 bilden gemeinsam das erfindungsgemäße Temperaturmesssystem 1, 2, 3.

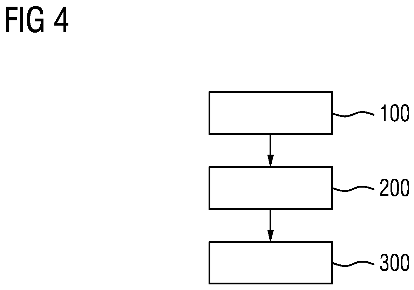

Mittels des erfindungsgemäßen Temperaturmesssystems 1, 2, 3 kann somit ein erfindungsgemäßes Verfahren wie folgt umgesetzt werden, vgl. Figur 4:
In einem ersten Schritt kann ein Anlegen 100 des elektrischen Wechselfelds E zwischen den beiden Elektroden 21, 22 des Temperatursensors 2 erfolgen. Aufgrund der Ausgestaltung und Anordnung des Temperatursensors 2 kann das elektrische Wechselfeld E dabei das Fluid durchdringen, welches durch die Durchgangsöffnung 11 des Körpers 10 der Medienführung 1 hindurch strömt.

In einem zweiten Schritt kann ein Erfassen 200 der frequenzabhängigen komplexen Gesamtimpedanz zwischen den beiden Elektroden 21, 22 als Funktion der Frequenz erfolgen.

In einem dritten Schritt kann ein Bestimmen 300 der Temperatur des Mediums bzw. des Fluids aus der erfassten frequenzabhängigen komplexen Gesamtimpedanz erfolgen. Dies kann dann ferner, wie bereits zuvor beschrieben, einer Person angezeigt werden. Zusätzlich oder alternativ kann die bestimmte Temperatur auch einer Steuerung oder Regelung zur Verfügung gestellt werden, um die bestimmte Temperatur zum Steuern oder Regel eines Prozesses zu verwenden.

### Bezugszeichenliste (Teil der Beschreibung)

- E: elektrisches Wechselfeld

- R: radiale Richtung
- U: Umfangsrichtung
- X: Längsachse

- 1, 2, 3: Temperaturmesssystem

- 1: Medienführung; Fluidleitung; Schlauch; Rohr; Kupplung
- 10: Körper; Schlauchkörper; Schlauchwand
- 11: Durchgangsöffnung
- 12: Innenwand
- 13: Außenwand

- 2: Temperatursensor; Impedanzsensor
- 20: (flexibler) Träger
- 21: erste Elektrode
- 22: zweite Elektrode

- 3: Messsystem; Auswertesystem
- 30: Messeinheit; Mess-Elektronik
- 31: (digitale) Auswerteeinheit
- 32: Ausgabeeinheit

- 4: Medium; Fluid

## Patentansprüche

1. Temperaturmesssystem (1, 2, 3)
mit einer Medienführung (1), vorzugsweise Fluidleitung (1), mit einem Körper (10), welcher eine Durchgangsöffnung (11) zur Führung des Mediums aufweist,
mit wenigstens einem Temperatursensor (2) mit einer ersten Elektrode (21) und mit einer zweiten Elektrode (22), welcher gegenüber der Durchgangsöffnung (11) der Medienführung (1) derart angeordnet sind, so dass zwischen den beiden Elektroden (21, 22) ein elektrisches Wechselfeld durch die Durchgangsöffnung (11) der Medienführung (1) hindurch angelegt werden kann, wobei die beiden Elektroden (21, 22) außerhalb der Durchgangsöffnung (11) des Körpers (10) der Medienführung (1) angeordnet sind, und
mit einem Messsystem (3), welches ausgebildet ist,
• das elektrische Wechselfeld zwischen den beiden Elektroden (21, 22) anzulegen,
**dadurch gekennzeichnet, dass** das Messsystem (3) ausgebildet ist,
• die frequenzabhängige komplexe Gesamtimpedanz zwischen den beiden Elektroden (21, 22) als Funktion der Frequenz zu erfassen und
• aus der erfassten frequenzabhängigen komplexen Gesamtimpedanz die Temperatur des Mediums zu bestimmen.

2. Temperaturmesssystem (1, 2, 3) nach Anspruch 1,
wobei die beiden Elektroden (21, 22) flächig ausgebildet und parallel zur flächigen Erstreckung des Körpers (10) der Medienführung (1) angeordnet sind.

3. Temperaturmesssystem (1, 2, 3) nach Anspruch 1 oder 2,
wobei die beiden Elektroden (21, 22) auf einem gemeinsamen, vorzugsweise flexiblen, Träger (20) angeordnet sind und
der Träger (20) an dem Körper (10) der Medienführung (1) gehalten wird.

4. Temperaturmesssystem (1, 2, 3) nach Anspruch 3,
wobei der Träger (20) formschlüssig, vorzugsweise ferner kraftschlüssig, auf dem, vorzugsweise zylindrischen, Körper (10) der Medienführung (1) gehalten wird.

5. Temperaturmesssystem (1, 2, 3) nach Anspruch 3 oder 4,
wobei die beiden Elektroden (21, 22) derart auf einem gemeinsamen Träger (20) angeordnet sind, um in berührenden Kontakt mit einer Außenwand (12) des Körpers (10) der Medienführung (1) auf dieser aufzuliegen.

6. Temperaturmesssystem (1, 2, 3) nach einem der vorangehenden Ansprüche, wobei der Körper (10) der Medienführung (1) eine Außenwand (12) aufweist und
der Temperatursensor (2) auf der Außenwand (12) des Körpers (10) angeordnet ist.

7. Temperaturmesssystem (1, 2, 3) nach einem der vorangehenden Ansprüche, wobei der Körper (10) der Medienführung (1) elektrisch isolierend ausgebildet ist.

8. Messverfahren zur Temperaturerfassung eines Mediums, vorzugsweise eines Fluids, innerhalb einer Durchgangsöffnung (11) einer Medienführung (1), vorzugsweise einer Fluidleitung (1), mittels wenigstens einem Temperatursensor (2) mit einer ersten Elektrode (21) und mit einer zweiten Elektrode (22), welcher gegenüber der Durchgangsöffnung (11) der Medienführung (1) derart angeordnet sind, so dass zwischen den beiden Elektroden (21, 22) ein elektrisches Wechselfeld durch die Durchgangsöffnung (11) der Medienführung (1) hindurch angelegt werden kann, wobei die beiden Elektroden (21, 22) außerhalb der Durchgangsöffnung (11) des Körpers (10) der Medienführung (1) angeordnet sind,
mit wenigstens dem Schritt:
• Anlegen (100) eines elektrischen Wechselfelds zwischen den beiden Elektroden (21, 22),
**gekennzeichnet durch** die Schritte:
• Erfassen (200) der frequenzabhängigen komplexen Gesamtimpedanz zwischen den beiden Elektroden (21, 22) als Funktion der Frequenz und
• Bestimmen (300) der Temperatur des Mediums aus der erfassten frequenzabhängigen komplexen Gesamtimpedanz.

## Claims

1. Temperature measurement system (1, 2, 3)
comprising a medium guide (1), preferably a fluid line (1), having a body (10) which has a through-opening (11) for guiding the medium,
comprising at least one temperature sensor (2) with a first electrode (21) and with a second electrode (22), which are arranged with respect to the through-opening (11) of the medium guide (1) such that an alternating electric field can be applied between the two electrodes (21, 22) through the through-opening (11) of the medium guide (1), wherein the two electrodes (21, 22) are arranged outside the through-opening (11) of the body (10) of the medium guide (1), and
comprising a measuring system (3), which is configured
• to apply the alternating electric field between the two electrodes (21, 22), **characterized in that** the measuring system (3) is configured
• to detect the frequency-dependent complex total impedance between the two electrodes (21, 22) as a function of the frequency and
• to determine the temperature of the medium from the detected frequency-dependent complex total impedance.

2. Temperature measurement system (1, 2, 3) according to claim 1,
wherein the two electrodes (21, 22) are formed in a planar manner and are arranged parallel to the planar extension of the body (10) of the medium guide (1).

3. Temperature measurement system (1, 2, 3) according to claim 1 or 2,
wherein the two electrodes (21, 22) are arranged on a common carrier (20), preferably a flexible carrier (20), and
the carrier (20) is held on the body (10) of the medium guide (1).

4. Temperature measurement system (1, 2, 3) according to claim 3,
wherein the carrier (20) is held in a form-fitting manner, preferably additionally in a force-fitting manner, on the preferably cylindrical body (10) of the medium guide (1).

5. Temperature measurement system (1, 2, 3) according to claim 3 or 4,
wherein the two electrodes (21, 22) are arranged on a common carrier (20) in such a way as to lie on an outer wall (12) of the body (10) of the medium guide (1) in touching contact therewith.

6. Temperature measurement system (1, 2, 3) according to one of the preceding claims,
wherein the body (10) of the medium guide (1) has an outer wall (12) and the temperature sensor (2) is arranged on the outer wall (12) of the body (10).

7. Temperature measurement system (1, 2, 3) according to one of the preceding claims,
wherein the body (10) of the medium guide (1) is electrically insulating.

8. Measuring method for determining the temperature of a medium, preferably a fluid, within a through-opening (11) of a medium guide (1), preferably a fluid line (1), by means of at least one temperature sensor (2) with a first electrode (21) and with a second electrode (22), which are arranged with respect to the through-opening (11) of the medium guide (1) such that an alternating electric field can be applied between the two electrodes (21, 22) through the through-opening (11) of the medium guide (1), wherein the two electrodes (21, 22) are arranged outside the through-opening (11) of the body (10) of the medium guide (1),
having at least the step:
• applying (100) an alternating electric field between the two electrodes (21, 22),
**characterized by** the steps of:
• detecting (200) the frequency-dependent complex total impedance between the two electrodes (21, 22) as a function of the frequency and
• determining (300) the temperature of the medium from the detected frequency-dependent complex total impedance.

## Revendications

1. Système de mesure de température (1, 2, 3)
comprenant un conduit de fluide (1), de préférence une conduite de fluide (1), avec un corps (10) qui présente une ouverture traversante (11) pour la conduction du fluide,
comprenant au moins un capteur de température (2) avec une première électrode (21) et une seconde électrode (22), qui sont disposées par rapport à l'ouverture traversante (11) du conduit de fluide (1) de telle sorte qu'un champ électrique alternatif puisse être appliqué entre les deux électrodes (21, 22) à travers l'ouverture traversante (11) du conduit de fluide (1), les deux électrodes (21, 22) étant disposées à l'extérieur de l'ouverture traversante (11) du corps (10) du conduit de fluide (1), et
comprenant un système de mesure (3) qui est configuré
• pour appliquer le champ électrique alternatif entre les deux électrodes (21, 22),
**caractérisé en ce que** le système de mesure (3) est configuré
• pour détecter l'impédance complexe totale dépendante de la fréquence entre les deux électrodes (21, 22) en fonction de la fréquence et
• pour déterminer la température du fluide à partir de l'impédance complexe totale dépendante de la fréquence détectée.

2. Système de mesure de température (1, 2, 3) selon la revendication 1,
dans lequel les deux électrodes (21, 22) sont réalisées de manière plane et sont disposées parallèlement à l'extension plane du corps (10) du conduit de fluide (1).

3. Système de mesure de température (1, 2, 3) selon la revendication 1 ou 2,
dans lequel les deux électrodes (21, 22) sont disposées sur un support commun (20), de préférence un support flexible (20), et
le support (20) est maintenu sur le corps (10) du conduit de fluide (1).

4. Système de mesure de température (1, 2, 3) selon la revendication 3,
dans lequel le support (20) est maintenu par engagement de forme, de préférence également par engagement de force, sur le corps (10), de préférence cylindrique, du conduit de fluide (1).

5. Système de mesure de température (1, 2, 3) selon la revendication 3 ou 4,
dans lequel les deux électrodes (21, 22) sont disposées sur un support commun (20) de manière à reposer, en contact, sur une paroi extérieure (12) du corps (10) du conduit de fluide (1).

6. Système de mesure de température (1, 2, 3) selon l'une des revendications précédentes,
dans lequel le corps (10) du conduit de fluide (1) présente une paroi extérieure (12) et
le capteur de température (2) est disposé sur la paroi extérieure (12) du corps (10).

7. Système de mesure de température (1, 2, 3) selon l'une des revendications précédentes,
dans lequel le corps (10) du conduit de fluide (1) est électriquement isolant.

8. Procédé de mesure pour la détermination de la température d'un fluide, de préférence d'un fluide, dans une ouverture traversante (11) d'un conduit de fluide (1), de préférence une conduite de fluide (1), au moyen d'au moins un capteur de température (2) avec une première électrode (21) et une seconde électrode (22), qui sont disposées par rapport à l'ouverture traversante (11) du conduit de fluide (1) de telle sorte qu'un champ électrique alternatif puisse être appliqué entre les deux électrodes (21, 22) à travers l'ouverture traversante (11) du conduit de fluide (1), les deux électrodes (21, 22) étant disposées à l'extérieur de l'ouverture traversante (11) du corps (10) du conduit de fluide (1),
comprenant au moins l'étape :
• application (100) d'un champ électrique alternatif entre les deux électrodes (21, 22),
**caractérisé par** les étapes consistant à :
• détection (200) de l'impédance complexe totale dépendante de la fréquence entre les deux électrodes (21, 22) en fonction de la fréquence et
• détermination (300) de la température du fluide à partir de l'impédance complexe totale dépendante de la fréquence détectée.
